# EUROPEAN PATENT APPLICATION

(11) **EP 3 211 102 A1**
(43) Date of publication of application: **30.08.2017**
(21) Application number: 17157445.2
(22) Date of filing: 22.02.2017
(51) Int. Cl.: C21D 1/09, B23P 15/00, F01D 5/00

(54) **METHOD OF TREATMENT, TURBINE COMPONENT, AND TURBINE SYSTEM**

(30) Priority: 24.02.2016 US 201615051861
(71) Applicant: General Electric Company, Schenectady, NY 12345 (US)
(72) Inventor: SRINIVASAN, Dheepa, 560066 Bangalore, Karnataka (IN); THOMPSON, Christopher Edward, Greenville, SC 29615 (US); NARAYANA, Dayananda, 560066 Bangalore, Karnataka (IN)
(74) Representative: Pöpper, Evamaria

(57) **Abstract**

A method of treatment includes laser-hardening (22) a portion (10) of a component (16) and texturing a treated surface (14) of the portion (10) with a hydrophobic surface texture (12). In some embodiments, the method includes polishing (24) the treated surface (14) after laser-hardening (22) the portion (10) and prior to texturing the treated surface (14). A component (16) includes a component (16) body having a portion (10) that is laser-hardened. The treated surface (14) is hydrophobic with a hydrophobic surface texture (12). In some embodiments, the component (16) is a turbine component (16). In some embodiments, the portion (10) is a leading edge. A turbine system includes a turbine shaft and a turbine component (16) attached to the turbine shaft. The turbine component (16) includes a component (16) body having a leading edge. The leading edge is laser-hardened and the treated surface (14) of the leading edge is hydrophobic with a hydrophobic surface texture (12).

## Description

### FIELD OF THE INVENTION

The present invention is directed to methods for treating components and treated components. More specifically, the present invention is directed to methods for laser treating turbine components and laser-treated turbine components.

### BACKGROUND OF THE INVENTION

Gas turbines are often subjected to harsh operating conditions and prolonged operation times, leading to oxidation and corrosion wear of gas turbine components. For gas turbine compressor rotor blades, these factors cause surface finish degradation, adversely affecting the aerodynamic performance of the blades by increasing the coefficient of drag (CD), resulting in reduced performance.

Compressor blades made of precipitation hardened steels and martensitic steels undergo leading edge erosion and corrosion, either as a result of wet compression during operation or as a result of water wash or other forms of corrosion from the atmosphere during service. Both leading edge erosion and corrosion tend to reduce the performance of compression blade very significantly.

Usually during major inspections, which are conducted at predetermined intervals, the rotor blades and stator vanes are manually scrubbed and/or cleaned to partially restore the surface finish of the blades and vanes. The scrubbing and/or cleaning of the rotor blades and vanes improves the surface finish, partially restoring gas turbine output and efficiency.

Manual scrubbing and/or cleaning of the rotor blades is a time-consuming process which results in a less than optimal surface finish on the blade. An alternative to manual scrubbing and/or cleaning of the rotor blades is electro-polishing of the rotor blades.

Electro-polishing of the rotor blades provides an improved surface finish to the blade in comparison to manual scrubbing. However, current electro-polishing practices require disassembly and/or transportation of the gas turbine. Disassembly and transportation increase the gas turbine downtime, resulting in lost productivity. Downtime for transportation of the gas turbine can be up to two months.

Steam turbines extract work from a flow of steam to generate power by converting the energy of high-temperature, high-pressure steam generated by a boiler into rotational energy by supplying the steam to cascades of stationary blades (nozzles) and moving blades (buckets). A typical steam turbine may include a rotor associated with a number of wheels. The wheels may be spaced apart from each other along the length of the rotor to define a series of turbine stages. The turbine stages are designed to extract useful work from the steam traveling on a flow path from an entrance to an exit of the turbine in an efficient manner. As the steam travels along the flow path, the steam causes the buckets to drive the rotor. The steam gradually may expand and the temperature and pressure of the steam gradually may decrease. The steam then may be exhausted from the exit of the turbine for reuse or otherwise. Higher temperature steam turbines may generate increased output as the increased temperature of the steam increases the overall energy available for extraction.

As the pressure and temperature change, the steam becomes wet. As the steam flows through the turbine stages of buckets and nozzles, moisture contained in the steam condenses into fine water droplets on turbine surfaces. The water on the component surfaces may lead to corrosion of the surfaces. These fine water droplets combine into coarse water droplets, which are scattered by the steam flow and collide with downstream components. The collisions damp the torque of the buckets through high speed impacts and thus decrease the total performance of the turbine. The coarse water droplets cause erosion of downstream component surfaces, which decreases the aerodynamic performance and section thickness of the components and thus shortens their useful lifespan.

### BRIEF DESCRIPTION OF THE INVENTION

In an embodiment, a method of treatment includes laser-hardening a leading edge of a turbine component and texturing a treated surface of the leading edge with a hydrophobic surface texture.

In another embodiment, a turbine component includes a component body having a leading edge. The leading edge is laser-hardened. The treated surface of the leading edge is hydrophobic with a hydrophobic surface texture.

In another embodiment, a turbine system includes a turbine shaft and a turbine component attached to the turbine shaft. The turbine component includes a component body having a leading edge. The leading edge is laser-hardened and the treated surface of the leading edge is hydrophobic with a hydrophobic surface texture.

Other features and advantages of the present invention will be apparent from the following more detailed description, taken in conjunction with the accompanying drawings which illustrate, by way of example, the principles of the invention.

### BRIEF DESCRIPTION OF THE DRAWINGS

FIG. 1 is a schematic cross sectional view of a gas turbine assembly, according to an embodiment of the disclosure.
FIG. 2 is a close-up view of the compressor section of the gas turbine assembly of FIG. 1.
FIG. 3 is a schematic view of a steam turbine assembly, according to an embodiment of the disclosure.
FIG. 4 is a cross sectional view of a portion of the steam turbine assembly of FIG. 3.
FIG. 5 is a schematic side view of a method of treatment, according to an embodiment of the disclosure.

Wherever possible, the same reference numbers will be used throughout the drawings to represent the same parts.

### DETAILED DESCRIPTION OF THE INVENTION

Provided are a method of laser treating a turbine component and a laser-treated turbine component having superior erosion and corrosion resistance.

Embodiments of the present disclosure, for example, in comparison to concepts failing to include one or more of the features disclosed herein, increase the surface hardness of a turbine component, increase the hydrophobicity of a turbine component, reduce or prevent droplet erosion during service operations, reduce or prevent water interaction with the turbine component, reduce or prevent corrosion of the turbine component, increase the longevity of the turbine component without pitting, enhance the performance of the turbine component, increase the efficiency of the component, or combinations thereof.

In some embodiments, the laser-treated item includes a turbine component of a gas turbine or a steam turbine, which may include, but is not limited to, a gas turbine compressor blade, a gas turbine rear stage compressor blade, a steam turbine bucket, a steam turbine nozzle, or a steam turbine casing. In preferred embodiments, the laser-treated item has a laser-hardened leading edge and a hydrophobic surface on the leading edge that is textured. In some embodiments, the turbine component is a new component that has not previously been in service in a turbine. In other embodiments, the turbine component is a used component that has previously been in service in a turbine. In some such embodiments, the treated turbine component is refurbished by the method of treatment.

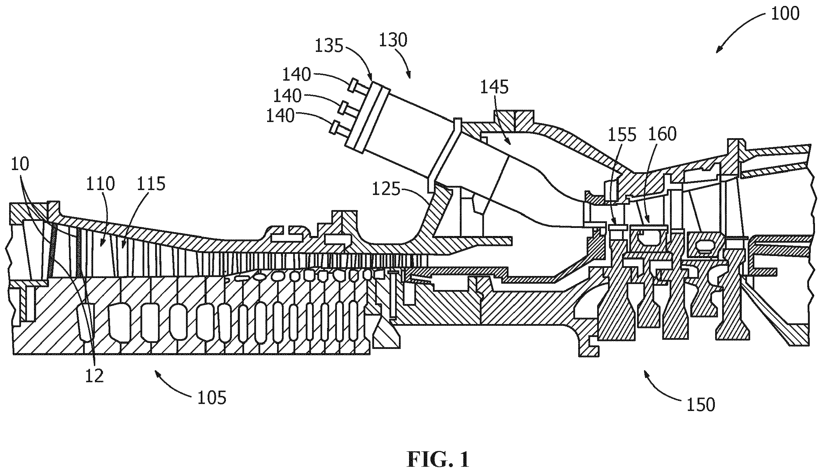

FIG. 1 shows a gas turbine 100 with a compressor section 105, a combustion section 130, and a turbine section 150. The compressor section 105 includes rotating compressor blades 110 and non-rotating compressor vanes 115 structured to compress a fluid. The compressor section 105 may also include a compressor discharge casing 125. The combustion section 130 includes combustion cans 135, fuel nozzles 140, and transition sections 145. Within each of the combustion cans 135, compressed air is received from the compressor section 105 and mixed with fuel received from a fuel source. The mixture is ignited and creates a working fluid. The working fluid generally flows downstream from the aft end of the fuel nozzles 140, downstream through the transition section 145, and into the turbine section 150. The turbine section 150 includes rotating components 155 and stationary components 160. The turbine section 150 converts the energy of the working fluid to a mechanical torque.

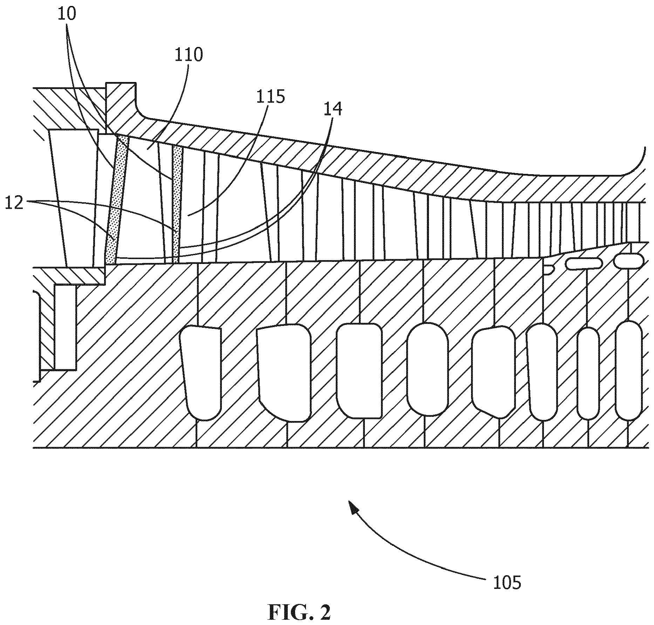

Referring to FIG. 1 and FIG. 2, a compressor blade 110 and a compressor vane 115 each has a leading edge 10 that has been laser hardened and includes a hydrophobic surface texture 12 on the treated surface 14 of the leading edge 10. Although FIG. 1 and FIG. 2 show one compressor blade 110 and one compressor vane 115 with a laser-hardened leading edge 10 with a treated surface 14 having a hydrophobic surface texture 12, any number of the compressor blades 110 and the compressor vanes 115 may have a laser-hardened leading edge 10 having a treated surface 14 with a hydrophobic surface texture 12 within the spirit of the present invention.

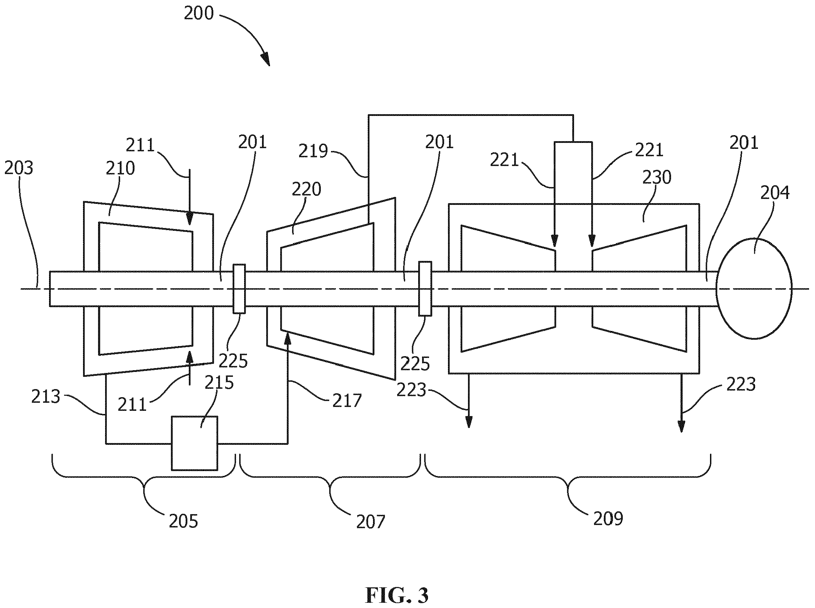

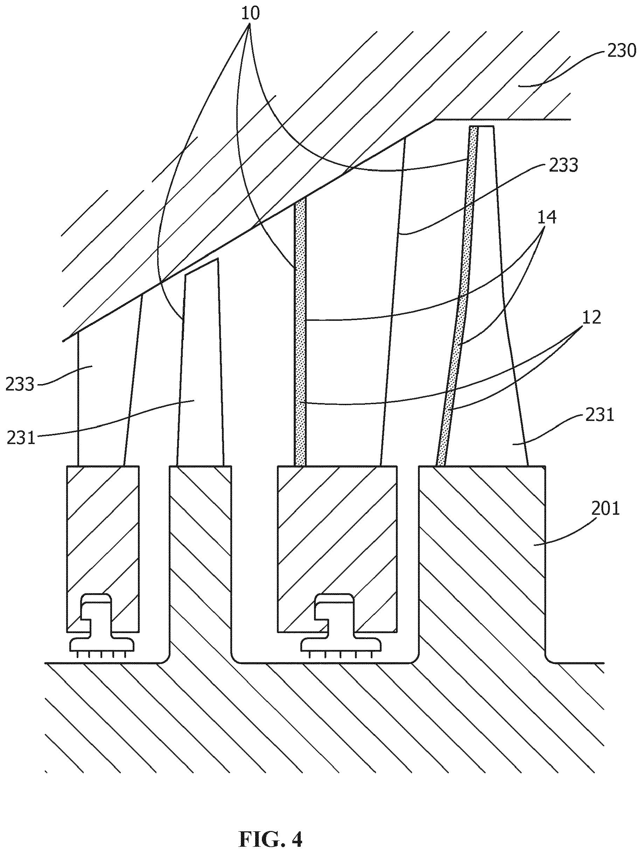

FIG. 3 shows a steam turbine system 200 with a turbine rotor 201 that is mounted rotatably about an axis of rotation 203. The steam turbine system 200 includes a high pressure (HP) section 205, an intermediate pressure (IP) section 207, and a low pressure (LP) section 209, each mounted on the rotor 201. While FIG. 3 shows one arrangement of the HP section 205, the IP section 207, and the LP section 209, the present disclosure is not so limited; any suitable arrangement of the HP section 205, the IP section 207, and/or the LP section 209 may be utilized. Each of the HP section 205, the IP section 207, and the LP section 209 includes blades or buckets 231 (see FIG. 4) that are circumferentially mounted on the rotor 201 in casings 210, 220, 230 in each of the HP section 205, the IP section 207, and the LP section 209, respectively. The buckets 231 are driven by steam fed to the respective section, where the rotation of the buckets 231 resulting from the steam generates mechanical work. The mechanical work produced in the turbine system 200 drives an external load 204, such as an electrical generator, via the rotor 201.

As shown in FIG. 3, high pressure steam is fed via high pressure steam inlets 211. The steam is exhausted from the HP section 205 at a high pressure steam outlet 213 and fed to a reheater 215, in which heat is added to the steam. From the reheater 215, the steam is fed to the IP section 207 via an intermediate pressure steam inlet 217. The steam is exhausted from the IP section 207 at an intermediate pressure steam outlet 219 and fed to the LP section 209 via a low pressure steam inlet 221. The steam is then exhausted from the LP section 209 via low pressure outlets 223.

Each of the HP section 205, the IP section 207, and the LP section 209 are connected along the rotor 201 via couplings 225. The couplings 225 may be mechanical couplings, such as bolted joints, or they may be welded joints. In one embodiment, the couplings 225 permit detachment of any of the HP section 205, the IP section 207, and/or the LP section 209 for reconfiguration, service, or maintenance.

Referring to FIG. 4, a section of the steam turbine system includes the turbine rotor 201 implanted circumferentially with buckets 231 and the casing 230 supporting nozzles 233. The buckets 231 and the nozzles 233 are arranged in stages in the axial direction of the turbine rotor 201. Generally, the buckets 231, casing 230, and nozzles 233 are constructed from suitable known turbine bucket, casing, and nozzle materials, including, but not limited to steel, stainless steel, precipitation-hardened stainless steel, aluminum, titanium, alloys thereof, or combinations thereof.

A bucket 231 and a nozzle 233 each has a leading edge 10 that has been laser hardened and includes a hydrophobic surface texture 12 on the treated surface 14 of the leading edge 10.

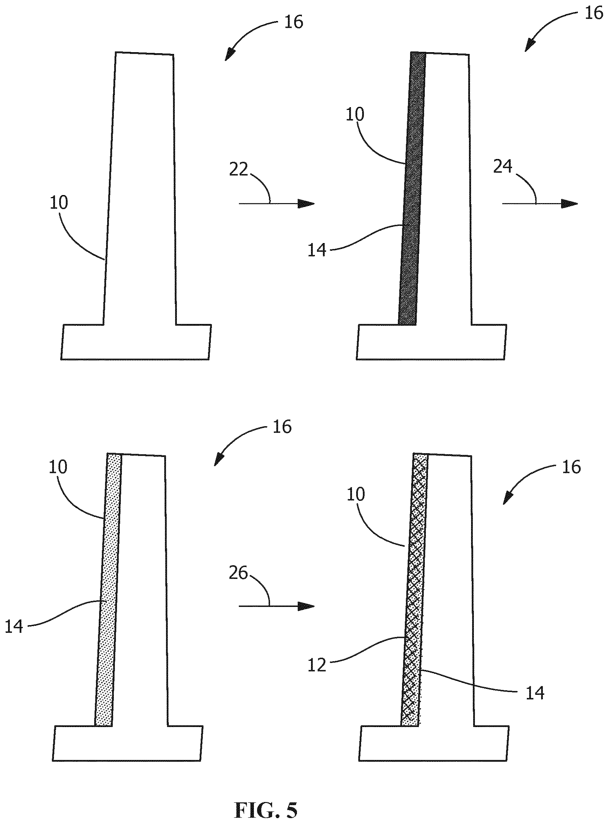

As shown in FIG. 5, a method of treatment includes laser-hardening 22 a leading edge 10 of a turbine component 16 and texturing 26 a treated surface 14 of the leading edge 10 with a hydrophobic surface texture 12. The turbine component 16 may be any turbine component 16 exposed to a corrosive or an erosive environment, including, but not limited to, a compressor blade 110, a compressor vane 115, a casing 230, a bucket 231, or a nozzle 233. The method of treatment preferably also includes polishing 24 the treated surface 14 of the leading edge 10 after laser-hardening 22 the leading edge 10 and prior to texturing 26 the treated surface 14 of the leading edge 10.

Laser hardening 22, as used herein, is a process of heating the outer layer of a material to just below its melting temperature with a laser beam and then moving the laser beam around the heated surface to harden the surface.

In some embodiments, the laser hardening 22 includes heating the outer layer of a material to just below its melting temperature with a laser beam and then moving the laser beam around the heated surface to convert locally from an austensitic state to a martensitic state. When the laser beam moves away from an area of the heated layer in the martensitic state, the heated layer cools very rapidly, by self-quenching with surrounding material, to remain in the martensitic state, thereby forming a hard surface layer at the treated surface 12. The depth of the hardening depends on the composition of the material and the strength of the laser. The hardening depth is in the range of about 0.1 mm to about 2.5 mm, alternatively about 0.1 mm to about 1.5 mm, alternatively about 0.3 mm to about 2 mm, alternatively about 1 mm to about 2 mm, or any suitable combination, sub-combination, range, or sub-range thereof. The hardness of the laser-hardened leading edge 10 is preferably in the range of about 2 to about 3 times greater than the bulk hardness of the turbine component 16.

A hydrophobic surface, as used herein, is a surface having a water contact angle greater than 90 degrees. The water contact angle, as used herein, is the angle, as measured through the water, where the water/air interface of a drop of water meets the solid surface. The water contact angle resulting from the hydrophobic surface texture 12 is greater than 90 degrees, alternatively greater than 100 degrees, alternatively greater than 110 degrees, alternatively greater than 120 degrees, alternatively greater than 130 degrees, alternatively greater than 140 degrees, alternatively greater than 150 degrees, alternatively in the range of 90 to 170 degrees, alternatively in the range of 100 to 160 degrees, alternatively in the range of 120 to 160 degrees, or any suitable combination, sub-combination, range, or sub-range thereof.

A superhydrophobic surface, as used herein, is a surface having a water contact angle greater than 135 degrees. The water contact angle resulting from the superhydrophobic surface texture 12 is greater than 135 degrees, alternatively greater than 140 degrees, alternatively greater than 150 degrees, alternatively greater than 160 degrees, alternatively in the range of 135 to 170 degrees, alternatively in the range of 140 to 170 degrees, alternatively in the range of 150 to 170 degrees, alternatively in the range of 160 to 170 degrees, or any suitable combination, sub-combination, range, or sub-range thereof. In some embodiments, the superhydrophobic surface texture 12 has a roll-off angle/contact angle hysteresis less than 10°. The roll-off angle, as used herein, is the angle of inclination of the surface at which the water drop rolls off the surface.

A hydrophobic surface texture 12, as used herein, is any surface texture formed in the surface of a material that changes the topography of the surface to increase the hydrophobicity of the surface such that the treated surface 14 with the hydrophobic surface texture 12 is hydrophobic. The changes to the topography may include, but are not limited to, indentations, protrusions, cavities, grooves, ridges, spheres, or rods. In some embodiments, the topography change is a micro-scale change. In some embodiments, the topography change is a nano-scale change. Any method capable of producing a hydrophobic surface texture 12 may be implemented to change the topography of the surface within the spirit of the present invention. In some embodiments, the treated surface 14 with the hydrophobic surface texture 12 is superhydrophobic.

The hydrophobic surface texture 12 may be formed by any method capable of laseretching 26 a texture 12 on the surface at the leading edge 10 of the turbine component 16 to make the surface hydrophobic or more hydrophobic than without the hydrophobic surface texture 12. In some embodiments, the hydrophobic surface texture 12 makes the surface superhydrophobic. In some embodiments, the laser used to laser etch 26 the hydrophobic surface texture 12 is a femtosecond laser, also known as a femto laser. In some embodiments, the femtosecond laser forms a three-dimensional texture by laser etching 26 the surface with high-energy femtosecond-long laser pulses. The laser-etched texture 12 may have a texturing in the micrometer to nanometer size range.

In some embodiments, the laser etching 26 creates one or more indentations in a treated surface 14 that have a micro-rough surface of protrusions, cavities, spheres, rods, or other regularly or irregularly shaped features that increases the hydrophobicity of the treated surface 14. The micro-rough features have dimensions in the range of 0.5 to 100 microns, alternatively in the range of 25 to 75 microns, alternatively in the range of 40 to 60 microns, or any suitable combination, sub-combination, range, or sub-range thereof. In other embodiments, the laser etching 26 creates one or more indentations in the treated surface 14 that have a nano-rough surface of protrusions, cavities, spheres, rods, or other irregularly shaped features that increases the hydrophobicity of the treated surface. The nano-rough features have dimensions in the range of 1 to 500 nanometers, alternatively in the range of 100 to 400 nanometers, alternatively in the range of 200 to 300 nanometers, or any suitable combination, sub-combination, range, or sub-range thereof.

In some embodiments, laser etching is accomplished by direct laser ablation, interferometric laser ablation, near-field laser ablation, mask-projection ablation, laser-assisted chemical etching, deposition from a laser ablation plume, or plasmonic nanoablation. In some embodiments, the laser etching 26 is accomplished using femtosecond duration laser pulses. A femtosecond duration laser pulse, as used herein, is any laser pulse having a duration in the range of 1 to 999 femtoseconds. The laser pulse has a duration in the range of 1 to 999 femtoseconds, alternatively in the range of 100 to 750 femtoseconds, alternatively in the range of 400 to 600 femtoseconds, or any suitable combination, sub-combination, range, or sub-range thereof.

The hydrophobic surface texture 12 created by the laser etching 26 may be any regular or irregular texture 12 that makes the treated surface 14 hydrophobic or more hydrophobic. In some embodiments, the hydrophobic surface texture 12 created by the laser etching 26 makes the treated surface 14 superhydrophobic. The hydrophobic surface texture 12 preferably deters water vapor from condensing on the treated surface 14 and preferably deters water droplets from sticking onto the treated surface 14.

In some embodiments, the portion of the turbine component 16 treated by the laser hardening 22 is made of an iron-based alloy, which may include, but is not limited to, a martensitic steel, a martensitic stainless steel, or a pressure hardened steel, or a cobalt-based material, which may include, but is not limited to, FSX-414, L-605, or Stellite^{®} 6 (Kennametal Inc., Latrobe, PA). In some embodiments, the portion of the turbine component 16 treated by the laser hardening 22 may be made of any material capable of being converted to a martensitic state or of undergoing a surface microstructure modification by the laser.

As used herein, "FSX-414" refers to an alloy including a cobalt-based carbidehardened composition, by weight, of about 29% chromium, about 7% tungsten, about 10% nickel, about 0.25% carbon, and a balance of cobalt.

As used herein, "L-605" refers to an alloy including a cobalt-based carbide-hardened composition, by weight, of about 55% cobalt, about 20% chromium, about 15% tungsten, about 10% nickel, about 0.1% carbon, and a balance of cobalt.

As used herein, "Stellite^{®} 6" refers to an alloy including a composition, by weight, of about 30% chromium, about 4-5% tungsten, about 1.2% carbon, <3% nickel, <1% molybdenum, <3% iron, <2% silicon, <0.5% others, and a balance of cobalt.

In some embodiments, the portion of the turbine component 16 treated by the laser hardening 22 is made of a laser-hardenable nickel-based superalloy, which may include, but is not limited to, GTD111, GTD444, GTD262, René N2, René N4, René N5, René N6, René 65, René 77, René 80, René 88DT, René 104, René 108, René 125, René 142, René 195, René N500, René N515, CM247, CMSX-4, MGA1400, MGA2400, IN100, INCONEL 700, INCONEL 738, INCONEL 792, DS Siemet, CMSX-10, PWA1480, PWA1483, PWA1484, TMS-75, TMS-82, Mar-M-200, UDIMET 500, ASTROLOY, or combinations thereof. In some embodiments, the turbine component 16 including a laser-hardenable nickel-based superalloy is a gas turbine component exposed to the hot gas path of the gas turbine.

As used herein, "ASTROLOY" refers to an alloy including a composition, by weight, of about 15% chromium, about 17% cobalt, about 5.3% molybdenum, about 4% aluminum, about 3.5% titanium, and a balance of nickel.

As used herein, "DS Siemet" refers to an alloy including a composition, by weight, of about 9% cobalt, about 12.1 % chromium, about 3.6% aluminum, about 4% titanium, about 5.2% tantalum, about 3.7% tungsten, about 1.8% molybdenum, and a balance of nickel.

As used herein, "GTD111" refers to an alloy including a composition, by weight, of about 14% chromium, about 9.5% cobalt, about 3.8% tungsten, about 4.9% titanium, about 3% aluminum, about 0.1% iron, about 2.8% tantalum, about 1.6% molybdenum, about 0.1% carbon, and a balance of nickel.

As used herein, "GTD262" refers to an alloy including a composition, by weight, of about 22.5% chromium, about 19% cobalt, about 2% tungsten, about 1.35% niobium, about 2.3% titanium, about 1.7% aluminum, about 0.1% carbon, and a balance of nickel.

As used herein, "GTD444" refers to an alloy including a composition, by weight, of about 7.5% cobalt, about 0.2% iron, about 9.75% chromium, about 4.2% aluminum, about 3.5% titanium, about 4.8% tantalum, about 6% tungsten, about 1.5% molybdenum, about 0.5% niobium, about 0.2% silicon, about 0.15% hafnium, and a balance of nickel.

As used herein, "MGA1400" refers to an alloy including a composition, by weight, of about 10% cobalt, about 14% chromium, about 4% aluminum, about 2.7% titanium, about 4.7% tantalum, about 4.3% tungsten, about 1.5% molybdenum, about 0.1% carbon, and a balance of nickel.

As used herein, "MGA2400" refers to an alloy including a composition, by weight, of about 19% cobalt, about 19% chromium, about 1.9% aluminum, about 3.7% titanium, about 1.4% tantalum, about 6% tungsten, about 1% niobium, about 0.1% carbon, and a balance of nickel.

As used herein, "PWA1480" refers to an alloy including a composition, by weight, of about 10% chromium, about 5% cobalt, about 5% aluminum, about 1.5% titanium, about 12% tantalum, about 4% tungsten, and a balance of nickel.

As used herein, "PWA1483" refers to an alloy including a composition, by weight, of about 9% cobalt, about 12.2% chromium, about 3.6% aluminum, about 4.1 % titanium, about 5% tantalum, about 3.8% tungsten, about 1.9% molybdenum, and a balance of nickel.

As used herein, "PWA1484" refers to an alloy including a composition, by weight, of about 5% chromium, about 10% cobalt, about 2% molybdenum, about 5.6% aluminum, about 9% tantalum, about 6% tungsten, and a balance of nickel.

As used herein, "René N2" refers to an alloy including a composition, by weight, of about 7.5% cobalt, about 13% chromium, about 6.6% aluminum, about 5% tantalum, about 3.8% tungsten, about 1.6% rhenium, about 0.15% hafnium, and a balance of nickel.

As used herein, "René N4" refers to an alloy including a composition, by weight, of about 9.75% chromium, about 7.5% cobalt, about 4.2% aluminum, about 3.5% titanium, about 1.5% molybdenum, about 6.0% tungsten, about 4.8% tantalum, about 0.5% niobium, about 0.15% hafnium, and a balance of nickel.

As used herein, "René N5" refers to an alloy including a composition, by weight, of about 7.5% cobalt, about 7.0% chromium, about 6.5% tantalum, about 6.2% aluminum, about 5.0% tungsten, about 3.0% rhenium, about 1.5% molybdenum, about 0.15% hafnium, and a balance of nickel.

As used herein, "René N6" refers to an alloy including a composition, by weight, of about 12.5% cobalt, about 4.2% chromium, about 7.2% tantalum, about 5.75% aluminum, about 6% tungsten, about 5.4% rhenium, about 1.4% molybdenum, about 0.15% hafnium, and a balance of nickel.

As used herein, "René 65" refers to an alloy including a composition, by weight, of about 13% cobalt, up to about 1.2% iron, about 16% chromium, about 2.1% aluminum, about 3.75% titanium, about 4% tungsten, about 4% molybdenum, about 0.7% niobium, up to about 0.15% manganese, and a balance of nickel.

As used herein, "René 77" refers to an alloy including a composition, by weight, of about 15% chromium, about 17% cobalt, about 5.3% molybdenum, about 3.35% titanium, about 4.2% aluminum, and a balance of nickel.

As used herein, "René 80" refers to an alloy including a composition, by weight, of about 14% chromium, about 9.5% cobalt, about 4% molybdenum, about 3% aluminum, about 5% titanium, about 4% tungsten, about 0.17% carbon, and a balance of nickel.

As used herein, "René 88DT" refers to an alloy including a composition, by weight, of about 16% chromium, about 13% cobalt, about 4% molybdenum, about 0.7% niobium, about 2.1% aluminum, about 3.7% titanium, about 4% tungsten, about 0.1% rhenium, a maximum of about 4.3% rhenium and tungsten, and a balance of nickel.

As used herein, "René 104" refers to an alloy including a composition, by weight, of about 13.1% chromium, about 18.2% cobalt, about 3.8% molybdenum, about 1.9% tungsten, about 1.4% niobium, about 3.5% aluminum, about 3.5% titanium, about 2.7% tantalum, and a balance of nickel.

As used herein, "René 108" refers to an alloy including a composition, by weight, of about 8.4% chromium, about 9.5% cobalt, about 5.5% aluminum, about 0.7% titanium, about 9.5% tungsten, about 0.5% molybdenum, about 3% tantalum, about 1.5% hafnium, and a balance of nickel.

As used herein, "René 125" refers to an alloy including a composition, by weight, of about 8.5% chromium, about 10% cobalt, about 4.8% aluminum, up to about 2.5% titanium, about 8% tungsten, up to about 2% molybdenum, about 3.8% tantalum, about 1.4% hafnium, about 0.11% carbon, and a balance of nickel.

As used herein, "René 142" refers to an alloy including a composition, by weight, of about 6.8% chromium, about 12% cobalt, about 6.1% aluminum, about 4.9% tungsten, about 1.5% molybdenum, about 2.8% rhenium, about 6.4% tantalum, about 1.5% hafnium, and a balance of nickel.

As used herein, "René 195" refers to an alloy including a composition, by weight, of about 7.6% chromium, about 3.1% cobalt, about 7.8% aluminum, about 5.5% tantalum, about 0.1% molybdenum, about 3.9% tungsten, about 1.7% rhenium, about 0.15% hafnium, and a balance of nickel.

As used herein, "René N500" refers to an alloy including a composition, by weight, of about 7.5% cobalt, about 0.2% iron, about 6% chromium, about 6.25% aluminum, about 6.5% tantalum, about 6.25% tungsten, about 1.5% molybdenum, about 0.15% hafnium, and a balance of nickel.

As used herein, "René N515" refers to an alloy including a composition, by weight, of about 7.5% cobalt, about 0.2% iron, about 6% chromium, about 6.25% aluminum, about 6.5% tantalum, about 6.25% tungsten, about 2% molybdenum, about 0.1% niobium, about 1.5% rhenium, about 0.6% hafnium, and a balance of nickel.

As used herein, "CM247" refer to an alloy including a composition, by weight, of about 5.5% aluminum, about 0.15% carbon, about 8.25% chromium, about 10% cobalt, about 10% tungsten, about 0.7% molybdenum, about 0.5% iron, about 1% titanium, about 3% tantalum, about 1.5% hafnium, and a balance of nickel.

As used herein, "IN100" refers to an alloy including a composition, by weight, of about 10% chromium, about 15% cobalt, about 3% molybdenum, about 4.7% titanium, about 5.5% aluminum, about 0.18% carbon, and a balance of nickel.

As used herein, "INCONEL 700" refers to an alloy including a composition, by weight, of up to about 0.12% carbon, about 15% chromium, about 28.5% cobalt, about 3.75% molybdenum, about 2.2% titanium, about 3% aluminum, about 0.7% iron, up to about 0.3% silicon, up to about 0.1% manganese, and a balance of nickel.

As used herein, "INCONEL 738" refers to an alloy including a composition, by weight, of about 0.17% carbon, about 16% chromium, about 8.5% cobalt, about 1.75% molybdenum, about 2.6% tungsten, about 3.4% titanium, about 3.4% aluminum, about 0.1% zirconium, about 2% niobium, and a balance of nickel.

As used herein, "INCONEL 792" refers to an alloy including a composition, by weight, of about 12.4% chromium, about 9% cobalt, about 1.9% molybdenum, about 3.8% tungsten, about 3.9% tantalum, about 3.1% aluminum, about 4.5% titanium, about 0.12% carbon, about 0.1 % zirconium, and a balance of nickel.

As used herein, "UDIMET 500" refers to an alloy including a composition, by weight, of about 18.5% chromium, about 18.5% cobalt, about 4% molybdenum, about 3% titanium, about 3% aluminum, and a balance of nickel.

As used herein, "Mar-M-200" refers to an alloy including a composition, by weight, of about 9% chromium, about 10% cobalt, about 12.5% tungsten, about 1% columbium, about 5% aluminum, about 2% titanium, about 10.14% carbon, about 1.8% hafnium, and a balance of nickel.

As used herein, "TMS-75" refers to an alloy including a composition, by weight, of about 3% chromium, about 12% cobalt, about 2% molybdenum, about 6% tungsten, about 6% aluminum, about 6% tantalum, about 5% rhenium, about 0.1% hafnium, and a balance of nickel.

As used herein, "TMS-82" refers to an alloy including a composition, by weight, of about 4.9% chromium, about 7.8% cobalt, about 1.9% molybdenum, about 2.4% rhenium, about 8.7% tungsten, about 5.3% aluminum, about 0.5% titanium, about 6% tantalum, about 0.1% hafnium, and a balance of nickel.

As used herein, "CMSX-4" refers to an alloy including a composition, by weight, of about 6.4% chromium, about 9.6% cobalt, about 0.6% molybdenum, about 6.4% tungsten, about 5.6% aluminum, about 1.0% titanium, about 6.5% tantalum, about 3% rhenium, about 0.1% hafnium, and a balance of nickel.

As used herein, "CMSX-10" refers to an alloy including a composition, by weight, of about 2% chromium, about 3% cobalt, about 0.4% molybdenum, about 5% tungsten, about 5.7% aluminum, about 0.2% titanium, about 8% tantalum, about 6% rhenium, and a balance of nickel.

In some embodiments, a carbon dioxide laser is used for the laser hardening 22. In other embodiments, a high power direct diode laser is used for the laser hardening 22. The high power direct diode laser has a power of at least 1 kW, alternatively 1-20 kW, alternatively 2-6 kW, or any suitable combination, sub-combination, range, or sub-range thereof.

The laser-hardened portion of the turbine component 16 preferably includes the leading edge 10 of the component. A leading edge 10, as used herein, is the upstream edge of the component with respect to the direction of flow in the turbine, which is the first portion contacted by the flowstream. The laser hardening 22 of the leading edge 10 of the turbine component 16 preferably increases the erosion resistance of the turbine component 16 in comparison to the corrosion resistance of the turbine component 16 prior to the laser hardening 22.

After the leading edge 10 of the turbine component 16 has been laser-hardened 22, at least a portion of the leading edge 10 is preferably polished 24 before being laser textured 26 to increase the hydrophobicity of the treated surface 14 at the leading edge 10. In some embodiments, the polishing 24 includes fine grinding and polishing of the leading edge 10 to a surface roughness (Rₐ) less than about 0.5 microns, alternatively less than about 1.0 microns, alternatively less than about 0.3 microns, alternatively in the range of 0.4-0.6 microns, alternatively in the range of 0.3-1.0 microns, alternatively in the range of 0.3-0.5 microns, alternatively in the range of 0.5-1 microns, or any suitable combination, sub-combination, range, or sub-range thereof.

In some embodiments, a leading edge 10 of a turbine component 16 is laser textured 26 to increase the hydrophobicity of the surface at the leading edge 10 without first laser hardening 22 the leading edge 10. In some such embodiments, the leading edge 10 of the turbine component 16 is made of a material that is not capable of being laser hardened 22, including, but not limited to, a nickel-based superalloy, including, but not limited to, GTD 111, GTD444, GTD262, René N2, René N4, René N5, René N6, René 65, René 77, René 80, René 88DT, René 104, René 108, René 125, René 142, René 195, René N500, René N515, CM247, CMSX-4, MGA1400, MGA2400, IN100, INCONEL 700, INCONEL 738, INCONEL 792, DS Siemet, CMSX-10, PWA1480, PWA1483, PWA1484, TMS-75, TMS-82, Mar-M-200, UDIMET 500, ASTROLOY, or combinations thereof.

The laser texturing 26 on the leading edge 10 increases the corrosion resistance of the turbine component 16 in comparison to the corrosion resistance of the turbine component 16 prior to the laser texturing 26. When used in combination, the laser hardening 22 of the leading edge 10 of the turbine component 16 followed by the laser texturing 26 on the laser-hardened surface provides increased erosion resistance and corrosion resistance of the turbine component 16 in comparison to the properties of the turbine component 16 prior to the process.

In certain embodiments, the hydrophobic surface texture 12 on the treated surface 14 of the turbine component 16 is textured such that any water droplets that form on and are released by the turbine component 16 are less than a predetermined size to minimize or eliminate erosion downstream by the water droplets impacting a downstream turbine component 16. The predetermined size may be 200 microns, alternatively 150 microns, alternatively 100 microns, or any suitable combination, sub-combination, range, or sub-range thereof. In a preferred embodiment, the predetermined size is the critical size, below which a water droplet does not cause any downstream erosion by impact. Although this critical size depends upon the operating conditions of the turbine, it is usually in the range of 100 to 200 microns.

The laser texturing 26 to prevent the release of droplets larger than a predetermined size may be accomplished in any of a number of different ways. In some embodiments, the laser texturing 26 provides a degree of hydrophobicity and an area of surface coverage that inhibit water vapor condensing and coalescing to a degree such that any water vapor condensing and coalescing on the surface releases from the surface before reaching the predetermined size. In other embodiments, the laser texturing provides patterns of areas of varying hydrophobicity on the surface to direct the condensing and coalescing water along the surface in a controlled direction and manner that prevents sufficient coalescence of water to reach the predetermined size before the water droplet is released.

Although the process has been described primarily for a turbine component 16, the process may be applied to any system capable of undergoing laser hardening, laser texturing, or laser hardening and laser texturing and where erosion, corrosion, or erosion and corrosion are issues.

While the invention has been described with reference to one or more embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims. In addition, all numerical values identified in the detailed description shall be interpreted as though the precise and approximate values are both expressly identified.

Various aspects and embodiments of the present invention are defined by the following numbered clauses:
1. A method of treatment, comprising:
   laser-hardening a leading edge of a turbine component; and
   texturing a treated surface of the leading edge with a hydrophobic surface texture.
2. The method of clause 1 wherein the turbine component comprises a material selected from the group consisting of a precipitation hardening steel, a martensitic steel, and a nickel-based superalloy.
3. The method of clause 1 wherein the laser-hardening increases a leading edge hardness of the turbine component to a depth in the range of 0.3 to 2 mm at the leading edge.
4. The method of clause 3 wherein the laser-hardening increases the leading edge hardness of the turbine component in the range of 2 to 3 times relative to a bulk hardness of the turbine component prior to the laser-hardening.
5. The method of clause 1 further comprising polishing the treated surface of the leading edge after laser-hardening the leading edge and prior to texturing the treated surface of the leading edge.
6. The method of clause 1 wherein the texturing comprises using a femtosecond laser to laser texture the treated surface of the leading edge.
7. The method of clause wherein a water contact angle of the treated surface of the leading edge is greater than 90 degrees.
8. The method of clause 1 wherein the treated surface of the leading edge is superhydrophobic.
9. The method of clause 1 wherein the turbine component is selected from the group consisting of a compressor blade of a gas turbine, a steam turbine blade, and a casing of a steam turbine.
10. A turbine component, comprising:
   a component body having a leading edge, wherein the leading edge is laser-hardened and wherein a treated surface of the leading edge is hydrophobic with a hydrophobic surface texture.
11. The turbine component of clause 10 wherein the component body comprises a material selected from the group consisting of a precipitation hardening steel, a martensitic steel, and a nickel-based superalloy.
12. The turbine component of clause 10 wherein the leading edge has a leading edge hardness greater than a bulk hardness of the component body to a depth of 0.3 to 2 mm.
13. The turbine component of clause 12 wherein the leading edge hardness is in the range of 2 to 3 times greater than the bulk hardness.
14. The turbine component of clause 10 wherein the surface of the leading edge is superhydrophobic.
15. The turbine component of clause 10 wherein the turbine component is selected from the group consisting of a compressor blade of a gas turbine, a steam turbine blade, and a casing of a steam turbine.
16. A turbine system, comprising:
   a turbine shaft; and
   a turbine component attached to the turbine shaft, the turbine component comprising a component body having a leading edge, wherein the leading edge is laser-hardened and wherein a surface of the leading edge is hydrophobic with a hydrophobic surface texture.
17. The turbine system of clause 16 wherein the component body comprises a material selected from the group consisting of a precipitation hardening steel, a martensitic steel, and a nickel-based superalloy.
18. The turbine system of clause 16 wherein the leading edge has a leading edge hardness greater than a bulk hardness of the blade body to a depth in the range of 0.3 to 2 mm.
19. The turbine system of clause 18 wherein the leading edge hardness is in the range of 2 to 3 times greater than the bulk hardness.
20. The turbine system of clause 16 wherein the turbine component is selected from the group consisting of a compressor blade of a gas turbine and a steam turbine blade.

## Claims

1. A method of treatment, comprising:
laser-hardening (22) a portion (10) of a component (16); and
texturing a treated surface (14) of the portion (10) of the component (16) with a hydrophobic surface texture (12).

2. The method of claim 1 wherein the laser-hardening (22) increases a surface hardness of the portion (10) of the component (16) in the range of 2 to 3 times relative to a bulk hardness of the component (16) prior to the laser-hardening (22) to a depth in the range of 0.3 to 2 mm.

3. The method of claim 1 or claim 2 further comprising polishing (24) the treated surface (14) after laser-hardening (22) the portion (10) of the component (16) and prior to texturing the treated surface (14).

4. The method of any preceding claim wherein the texturing comprises using a femtosecond laser to laser etch (26) the treated surface (14).

5. The method of any preceding claim wherein the treated surface (14) is superhydrophobic.

6. A component (16), comprising:
a component body comprising a portion (10), wherein the portion (10) is laser-hardened and wherein a treated surface (14) of the portion (10) is hydrophobic with a hydrophobic surface texture (12).

7. The component (16) of claim 6 wherein the component (16) body comprises a material selected from the group consisting of a precipitation hardening steel, a martensitic steel, and a nickel-based superalloy.

8. The component (16) of claim 6 or claim 7 wherein the portion (10) has a surface hardness greater than a bulk hardness of the component (16) body to a depth of 0.3 to 2 mm, and wherein the surface hardness is in the range of 2 to 3 times greater than the bulk hardness.

9. The component (16) of any of the preceding claims 6 to 8 wherein the treated surface (14) is superhydrophobic.

10. A turbine system, comprising:
a turbine shaft; and
a turbine component (16) attached to the turbine shaft, the turbine component (16) comprising a component body having a leading edge, wherein the leading edge is laser-hardened and wherein a surface of the leading edge is hydrophobic with a hydrophobic surface texture (12).
